# EUROPEAN PATENT SPECIFICATION

(11) **EP 2 754 366 B1**
(45) Date of publication and mention of the grant of the patent: **24.08.2016**
(21) Application number: 13196678.0
(22) Date of filing: 11.12.2013
(51) Int. Cl.: B60N 3/00, B60R 7/06, B60R 11/00, A47B 13/12

(54) **Instrument panel and support unit intended for same**
Instrumententafel und Unterstützungseinheit dafür
Panneau d'instrument et unité de support destinée à celui-ci

(30) Priority: 10.01.2013 SE 1350018
(43) Date of publication of application: 16.07.2014
(73) Proprietor: Scania CV AB, 151 87 Södertälje (SE)
(72) Inventor: Isacsson, Robin, 646 35 Gnesta (SE); Hallgren, Rikard, 436 35 Askim (SE); Rignér, Tomas, 147 34 Tumba (SE); Skeppström, Tomas, 151 39 Södertälje (SE)
(74) Representative: Scania CV AB

(56) References cited:
- WO-A1-97/06030
- DE-U1- 9 213 988
- FR-A1- 2 915 440
- JP-U- H0 471 327
- US-A- 5 390 609

## Description

### TECHNICAL FIELD OF THE INVENTION

The invention concerns an instrument panel for a motor vehicle, which instrument panel has a top that comprises a support unit.

### BACKGROUND

Motor vehicles, particularly goods vehicles and buses, often require a flat surface in proximity to the driver seat and/or passenger seat, on which surface the driver can keep random paper documents, a laptop computer or similar small items that should be readily accessible from the driver and/or passenger seat. The existing table surface of the instrument trays, however, too small, and there is a desire to increase this support surface. However, a larger support surface can result in degradation of the driver visibility in front of the vehicle, which means that it is difficult to see what is in front of the vehicle, both when driving slowly while parking and also when the vehicle is being driven at normal speed and something jumps out in front of the car.

An instrument panel for a motor vehicle according to the preamble of claim 1 is known from DE9213988 U1. FR2715114 A1 describes a storage unit, comprising a storage surface, wherein the cover of the storage box is transparent and can be used as said surface for items. The transparent cover means that it is possible to see through the cover and see what is in the box, but because the storage box is not transparent, the forward visibility is not improved.

FR2915440 A1 describes a glove box in the dashboard which has an extra glove box fitted below the preceding one. Between the glove box and the extra glove box a re-movable net is arranged, which allows the user to see what is in the extra glove box.

US5390609 A describes a desk structure provided for adjustable positioning upon vehicular consoles of variable contours and dimensions in tight gripping relation therewith.

### DESCRIPTION OF THE INVENTION

One object of the invention is to achieve an instrumental panel of the type described above that can provide a support surface that is readily accessible to the driver and/or the passenger of a motor vehicle and large enough to be capable of simple use as an surface for items and/or work surface while, at the same time, the support surface does not degrade the forward visibility through the windshield for the driver during forward travel of the vehicle.
Another object is to provide a support surface in the instrument panel that is simple to produce using accepted production methods.

This object is achieved by means of the features that are specified in the claim 1.

According to the present invention, the instrument panel comprises a support unit that is disposed on the top of the instrument panel. The support unit comprises a support surface that is arranged so as to be mounted on the instrument panel by means of at least one support leg, and which is made at least partly of transparent material. In this way it is possible for the driver to see through the support unit.

According to the present invention, the transparent material is arranged on at least the front part of the support surface, as viewed in the direction of vehicle travel.

According to one embodiment of the present invention, the transparent part of the support unit consists of a fine-mesh netting, which offers the advantage that the support unit will not give off any reflections from, for example, the sun or the like.

According to one embodiment of the present invention, the transparent part of the support unit consists of a material that is entirely clear, which offers the advantage that the forward visibility through the windshield for the driver is optimal.

According to one embodiment of the present invention, the support unit is designed with a keyhole configuration to enable the support surface to be hooked onto the support leg. The keyhole configuration comprises a keyhole mount arranged on the support surface. The keyhole mount is arranged so as to receive a fastener arranged on the support leg. This offers the advantage that the support surface can easily be mounted on/removed from the support leg.
Other features and advantages of the invention are presented in the claims and the following description of exemplary embodiments.

### BRIEF DESCRIPTION OF THE DRAWINGS

FIG. 1 shows an oblique plane view of a part of an instrument panel in a goods vehicle equipped with a support unit according to the invention;
FIG. 2 shows an oblique plane view of a part of an instrumental panel equipped with an alternative embodiment of a support unit;
FIG. 3 shows a side view of a part of the instrument panel equipped with a support unit according to the invention;
FIG. 4 shows a rear view of a part of the instrument panel equipped with a support unit with an alternative embodiment of the support legs.

In the drawings, parts with the same function are consistently identified using the same reference designations.

### DETAILED DESCRIPTION OF THE EMBODIMENTS

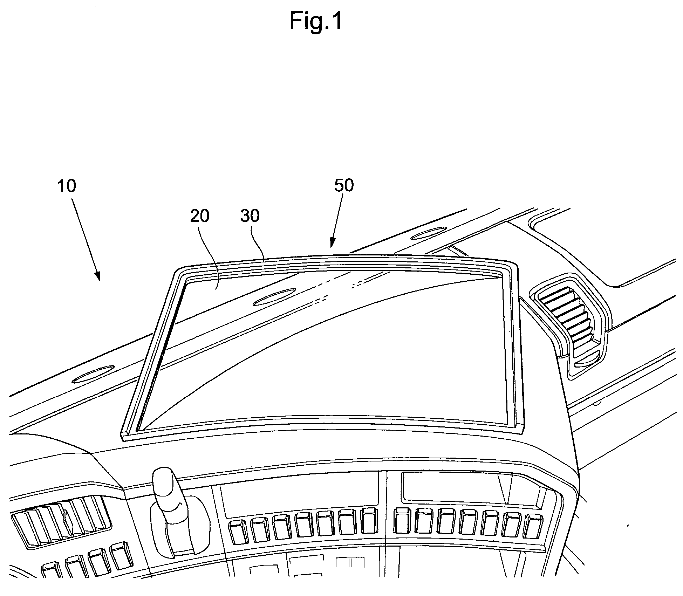

The instrument panel 10 shown in FIGs. 1-4 is equipped with a support unit 50 that is disposed between a driver and passenger side in a commercial motor vehicle such as a goods vehicle. However, alternative placements of the support unit 50 are possible, e.g. the support unit 50 could be disposed on the left side of the driver seat, as viewed from the perspective of the driver.

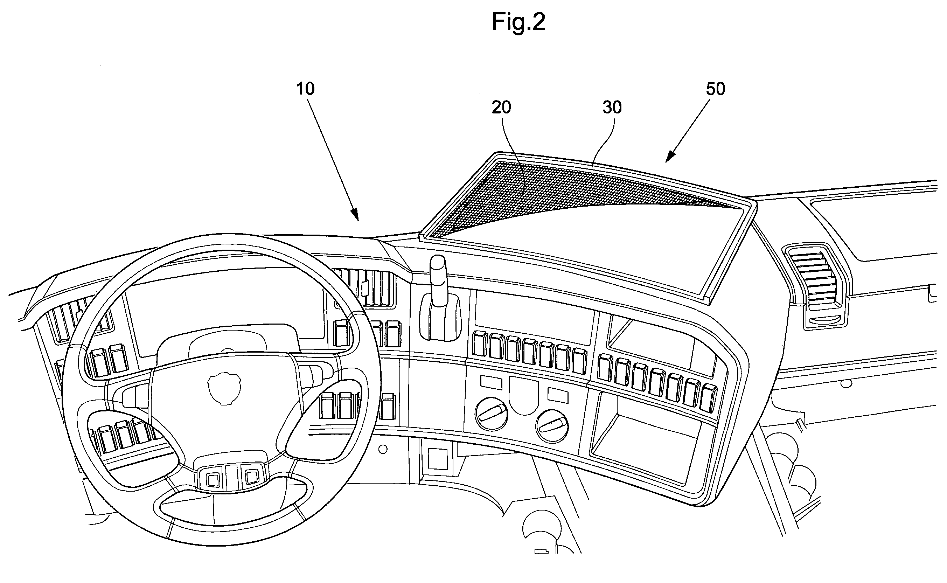

The support unit 50 comprises a die-cast plastic frame 30 that is arranged so as to receive a support surface 20. The support surface 20 is made at least partly of transparent material to make it possible to achieve a large support surface without degrading the close-up visibility of the driver. The transparent material is arranged on the front part of the support surface 20, relative to the direction of vehicle travel. In FIGs. 1-4, the support surface 20 is made only partly of transparent material, but it is also possible for the entire surface 20 to be made of transparent material. The transparent material can consist, for example, of clear glass or plastic, or a fine-mesh netting of plastic or plate material. FIG. 1 shows a support surface 20, part of which made of a transparent material, clear glass. FIG. 2 shows a support surface 20 made partly of a transparent material, fine-mesh netting. The advantage of using fine-mesh netting for the transparent part of the support surface 20 is that no reflections will arise from the surface that could disturb the driver during forward travel of the vehicle. In order for the close-up visibility to be as good as possible for the driver, the fine-mesh netting should be arranged with a sufficiently large mesh, i.e. the diameters of the openings should be greater than the thickness of the netting. In FIGs. 1-4, the support surface has a rectangular shape, but different shapes are possible, such as square, oval, etc. In those cases where the support surface also has a non-transparent part, the transparent part is joined with the non-transparent part by means of a suitable manufacturing method. The non-transparent part of the support surface can be made of any suitable material, e.g. a plastic material or an easy-to-grip rubber mat.

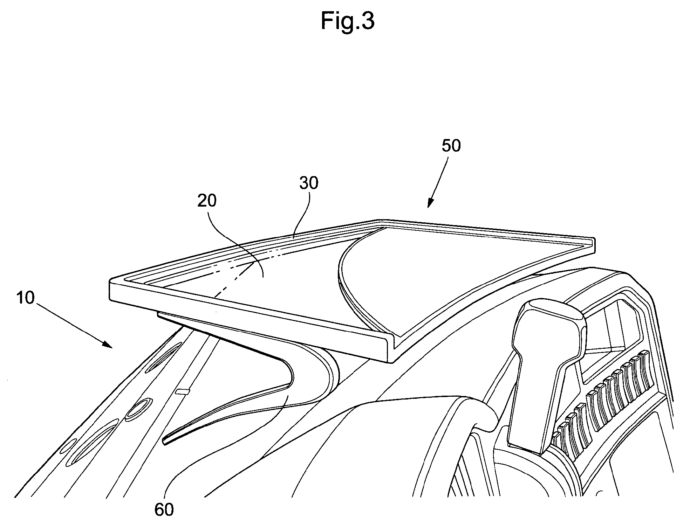

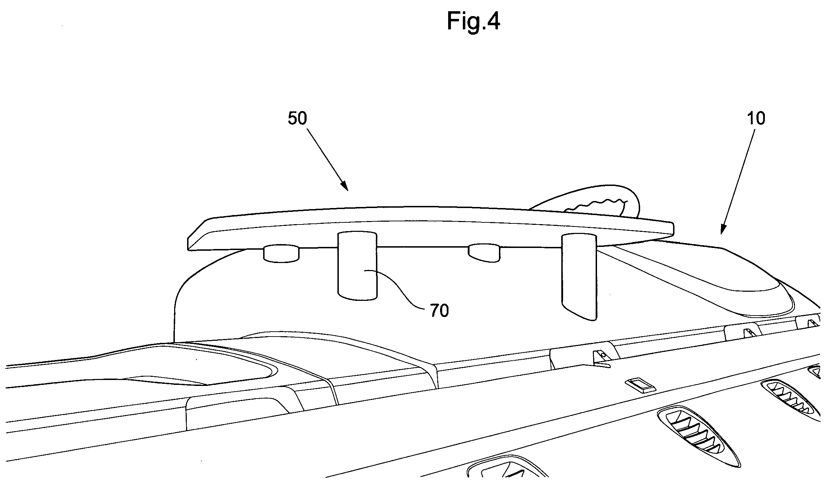

As FIG. 3 shows, the support surface 20 and its plastic frame 30 are arranged on the instrument panel by means of two brackets 60. It is suggested that the brackets 60 be mounted securely on the instrument panel 10, e.g. by means of suitable fastening elements such as bolts. The frame 30 and the support surface 20 intended for same can then be securely hooked to the brackets 60 in accordance with, for example, a keyhole configuration, making them easy to mount and remove. The keyhole configuration comprises a keyhole mount preferably arranged on the support surface. The keyhole mount is arranged so as to receive a fastener arranged on the support leg. The keyhole configuration offers the advantage that the support unit 50 can be used as a support surface in locations in the vehicle other than the instrument panel 10, e.g. the support unit 50 could be arranged on the steering wheel or the bed as needed. This solution thus offers greater safety, as the support unit 50 is prevented from coming loose in the event of any accident, thereby eliminating the risk of injuring the driver and/or passenger. Alternatively, the brackets 60 can also be mounted by means of a keyhole configuration in the instrument panel 10 in order to enable the simple mounting/removing of the brackets 60 to/from the instrument panel, while also enabling the use of the brackets 60 for other devices in the vehicle.
As FIG. 4 shows, an alternative embodiment of the support unit 50 entails that the support surface 30 is arranged on the instrument panel 10 by means of at least one cylinder 70, although it is desirable for a plurality of cylinders 70 to be used in order to achieve better stability for the support unit 50. The cylinders are securely mounted on the instrument panel, for example by means of bolts. The support unit can then be hooked onto the cylinders 70 by means of, for example, a keyhole configuration, although other solutions are also possible.

## Claims

1. An instrument panel (10) for a motor vehicle comprising a support unit (50) arranged on the top of the instrument panel (10), the support unit (50) comprises a support surface (20) arranged so as to be secured to the instrument panel (10) by means of at least one support leg (60, 70) **characterized in that**, the support surface (20) is made at least in part of transparent material wherein the transparent material is disposed in at least the front part, in the direction of vehicle travel, of the support surface (20).

2. An instrument panel (10) according to claim 1, wherein the transparent material is of fine-mesh netting.

3. An instrument panel (10) according to claims 1, wherein the transparent material is completely clear.

4. An instrument panel (10) according to any of the preceding claims, wherein the support unit (50) is arranged with a keyhole configuration, preferably arranged on the support unit (20) by means of a keyhole mount, and the keyhole mount is further arranged so as to receive a fastener arranged on the support leg (60, 70)

5. The instrument panel (10) according to any of the preceding claims, wherein the support leg is designed as a bracket (60).

6. The instrument panel (10) according to any of claims 1-4, wherein the support leg is designed as a cylinder (70).

7. A motor vehicle equipped with an instrument panel (10) according to any of the preceding claims.

## Patentansprüche

1. Instrumententafel (10) für ein Kraftfahrzeug, umfassend eine an der Oberseite der Instrumententafel (10) angebrachte Unterstützungseinheit (50), wobei die Unterstützungseinheit (50) eine nterstützungsfläche (20) umfasst, die angeordnet ist, um an die Instrumententafel (10) mittels wenigstens eines Standbeins (60, 70) befestigt zu werden, **dadurch gekennzeichnet, dass** die Unterstützungsfläche (20) wenigstens teilweise aus einem transparenten Material hergestellt ist, wobei das transparente Material in wenigstens dem vorderen Bereich, in der Fahrtrichtung des Kraftfahrzeugs betrachtet, der Unterstützungsoberfläche (20) angeordnet ist.

2. Instrumententafel (10) nach Anspruch 1, wobei das transparente Material ein engmaschiges Geflecht ist.

3. Instrumententafel (10) nach Anspruch 1, wobei das transparente Material vollständig durchsichtig ist.

4. Instrumententafel (10) nach einem der vorherigen Ansprüche, wobei die Unterstützungseinheit (50) mit einer Schlüssellochanordnung ausgebildet ist, vorzugsweise auf der Unterstützungseinheit (20) mittels einer Schlüssellochbefestigung ausgebildet ist und wobei die Schlüssellochbefestigung weiter ausgebildet ist, um ein an dem Stützbein (60, 70) angeordnetes Befestigungsmittel aufzunehmen.

5. Instrumententafel (10) nach einem der vorherigen Ansprüche, wobei das Stützbein als eine Halterung (60) ausgebildet ist.

6. Instrumententafel (10) nach einem der Ansprüche 1 bis 4, wobei das Befestigungsbein als ein Zylinder (70) ausgebildet ist.

7. Kraftfahrzeug, ausgerüstet mit einer Instrumententafel (10) nach einem der vorherigen Ansprüche.

## Revendications

1. Tableau de bord (10) pour véhicule à moteur, comprenant une unité support (50) disposée sur la partie supérieure du tableau de bord (10), l'unité support (50) comprenant une surface de support (20) disposée de façon à être fixée sur le tableau de bord (10) au moyen d'au moins un pied de support (60, 70), **caractérisé en ce que** la surface de support (20) est constituée au moins en partie de matériau transparent, le matériau transparent étant disposé dans au moins la partie avant, dans la direction de déplacement du véhicule, de la surface de support (20).

2. Tableau de bord (10) selon la revendication 1, dans lequel le matériau transparent est un filet à maillage fin.

3. Tableau de bord (10) selon la revendication 1, dans lequel le matériau transparent est intégralement transparent.

4. Tableau de bord (10) selon l'une quelconque des revendications précédentes, dans lequel l'unité support (50) est dotée d'une configuration en forme de trou de serrure, de préférence disposée sur la surface de support (20) à l'aide d'un logement en trou de serrure, et le logement en trou de serrure est en outre agencé de façon à recevoir une pièce de fixation disposée sur le pied de support (60, 70).

5. Tableau de bord (10) selon l'une quelconque des revendications précédentes, dans lequel le pied de support est conçu en forme d'étrier (60).

6. Tableau de bord (10) selon l'une quelconque des revendications 1 à 4, dans lequel le pied de support est conçu en forme de cylindre (70).

7. Véhicule à moteur équipé d'un tableau de bord (10) selon l'une quelconque des revendications précédentes.
